# EUROPÄISCHE PATENTSCHRIFT

(11) **EP 2 194 329 B1**
(45) Veröffentlichungstag und Bekanntmachung des Hinweises auf die Patenterteilung: **14.10.2015**
(21) Anmeldenummer: 09014339.7
(22) Anmeldetag: 17.11.2009
(51) Int. Cl.: F24F 7/08, F24F 12/00, F24F 13/14

(54) **Raumlufftechnisches Geräts sowie Verfahren zum Betreiben des raumlufttechnischen Geräts**
Ventilation device and method of operating the ventilation device
Appareil de ventilation ainsi que procédé de fonctionnement de l'appareil de ventilation

(30) Priorität: 08.12.2008 DE 102008063555
(43) Veröffentlichungstag der Anmeldung: 09.06.2010
(73) Patentinhaber: LTG Aktiengesellschaft, 70435 Stuttgart (DE)
(72) Erfinder: Roth, Hans-Werner, 71732 Tamm (DE); Wagner, Ralf, 70771 Leinfelden-Echterdingen (DE)
(74) Vertreter: Grosse, Rainer

(56) Entgegenhaltungen:
- EP-A2- 0 816 769
- EP-A2- 0 816 770
- WO-A1-97/06390
- FI-A- 874 417
- JP-A- 61 062 743
- US-A- 3 847 065
- US-A- 4 589 476

## Beschreibung

Die Erfindung betrifft ein raumlufttechnisches Gerät mit einem ersten und einem zweiten Luftkanal, wobei die beiden Luftkanäle mittels einer Verschlusseinrichtung verschließbar oder teilweise oder ganz zu öffnen sind.

Derartige raumlufttechnische Geräte sind bekannt und dienen zur Belüftung oder Klimatisierung eines Raumes eines Gebäudes oder dergleichen . Ein derartiges, bekanntes Gerät weist zwei Luftkanäle auf, die einer Luftabführung aus dem Raum und einer Luftzuführung in den Raum dienen. In Abhängigkeit von einer gewünschten Betriebsweise lassen sich die Luftkanäle mittels einer Verschlusseinrichtung verschließen oder teilweise oder ganz öffnen.

Der Erfindung liegt die Aufgabe zugrunde, ein raumlufttechnisches Gerät der eingangs genannten Art zu schaffen, das bei einfachem Aufbau eine besonders vielseitige Betriebsführung gestattet. Insbesondere sollen sehr große Luftvolumenströme, vorzugsweise bei niedrigem Schalldruckpegel, führbar sein.

Diese Aufgabe wird erfindungsgemäß gelöst durch die Merkmalskombination der Ansprüche 1 und 13. Eine erfindungsgemäße Funktionsvielfalt wird dadurch erzielt, dass die insbesondere einzige Verschlusseinrichtung Dokument EP-0816769-A offenbart ein raumlufttechnisches Gerät mit einem ersten und einem zweiten Luftkanal, wobei die beiden Luftkanäle mittels einer Verschlusseinrichtung verschließbar oder teilweise oder ganz zu öffnen sind, wobei durch eine die beiden Luftkanäle strömungstechnisch verbindende Querverbindung, der die Verschlusseinrichtung derart zugeordnet ist, dass diese in einer ersten Stellung die Querschnitte beider Luftkanäle verschließt und dabei die Querverbindung zumindest teilweise öffnet, und in mindestens einer zweiten Stellung die Querschnitte beider Luftkanäle ganz oder teilweise öffnet und dabei die Querverbindung ganz oder teilweise schließt. unterschiedliche Stellungen einnehmen kann, nämlich die erwähnte erste Stellung und die erwähnte mindestens eine zweite Stellung. Bevorzugt lässt sich ein einziges Verstellglied der Verschlusseinrichtung in die erwähnten Stellungen verlagern, wodurch die erwähnten Effekte erzielt werden, nämlich das Verschließen beider Luftkanäle und das damit einhergehende, zumindest teilweise erfolgende Öffnen der Querverbindung einerseits und das ganz oder teilweise erfolgende Öffnen der beiden Querschnitte der Luftkanäle und das dabei einhergehende ganz oder teilweise erfolgende Verschließen der Querverbindung andererseits. In der erwähnten ersten Stellung, in der die Querschnitte der beiden Luftkanäle verschlossen werden, erfolgt einerseits eine Verschlusswirkung, das heißt, entlang der beiden Luftkanäle kann die Verschlusseinrichtung von strömender Luft nicht mehr passiert werden, wobei jedoch gleichzeitig die erwähnte Querverbindung zumindest teilweise geöffnet wird, sodass ein dem Öffnungsgrad entsprechendes Überströmen von Luft aus einem der Luftkanäle in den anderen der Luftkanäle möglich wird. Hierdurch wird eine besondere Betriebsart des raumlufttechnischen Geräts auf einfache Weise ermöglicht, nämlich ein so genannter Umluftbetrieb, auf den nachstehend noch näher eingegangen wird. Von Bedeutung ist dabei, dass nur durch Stellungsänderung, insbesondere eines einzigen Verstellglieds der insbesondere einzigen Verschlusseinrichtung diese Wirkung auf entsprechend einfache Art und Weise erzielt ist. In der genannten zweiten Stellung sind die Querschnitte beider Luftkanäle ganz oder teilweise geöffnet und dabei ist die Querverbindung ganz oder teilweise geschlossen. Demzufolge können entsprechende Luftströme entlang der Luftkanäle strömen, wobei bei vollständigem Öffnen der Luftkanäle der volle Strömungsquerschnitt der Luftkanäle zur Verfügung steht und bei einem teilweise erfolgenden Öffnen die Querschnitte entsprechend eingeengt werden, sodass die Luftmengen in den Luftkanälen gesteuert oder geregelt werden können. Einher geht bei einer derartigen Betriebsführung, dass die Querverbindung entsprechend ganz oder entsprechend teilweise geschlossen wird, mit der Folge, dass bei vollständigem Schließen der Querverbindung kein Luftaustausch zwischen den beiden Luftkanälen möglich ist und bei nur teilweise erfolgendem Schließen in Abhängigkeit des Schließ- beziehungsweise Öffnungsgrads ein entsprechend großer Luftaustausch zwischen den Luftkanälen stattfindet.

Nach einer Weiterbildung der Erfindung ist vorgesehen, dass die Verschlusseinrichtung eine Luftklappe aufweist, deren Luftklappenblatt aus zwei Klappenblättern besteht und daher als eine Doppelklappe ausgebildet ist, wobei ein Klappenblatt mit dem ersten Luftkanal und das andere Klappenblatt mit dem zweiten Luftkanal zusammenwirkt. Demzufolge ist das zuvor erwähnte Verstellglied der Verschlusseinrichtung als Luftklappe, insbesondere Doppelklappe, ausgebildet, die in die erste Stellung oder in die mindestens eine zweite Stellung geschwenkt werden kann. Durch die Verschwenkungsmöglichkeit der Luftklappe können eine Vielzahl von zweiten Stellungen eingenommen werden, die dadurch gekennzeichnet sind, dass die Querschnitte beider Luftkanäle ganz oder - verschwenkungsstellungsabhängig - teilweise geöffnet sind und dabei die Querverbindung ganz oder teilweise geschlossen ist.

Es ist vorteilhaft, wenn beide Klappenblätter mit der Querverbindung zusammenwirken. Dies bedeutet, dass beide Klappenblätter zum Verschließen beziehungsweise Öffnen der Querverbindung genutzt werden. Die Querschnitte der beiden Luftkanäle hingegen wirken jeweils nur mit einem Klappenblatt zusammen.

Es ist vorteilhaft, wenn die Querverbindung einen Verbindungsquerschnitt aufweist, der sich aus zwei Teilquerschnitten zusammensetzt, wobei der eine Teilquerschnitt mit dem einen Klappenblatt und der andere Teilquerschnitt mit dem anderen Klappenblatt zusammenwirkt. Insbesondere grenzen die beiden Teilquerschnitte direkt aneinander. In der so gebildeten gedachten Grenzlinie liegt bevorzugt eine Drehachse der Doppelklappe.

Die Querverbindung ist bevorzugt als Queröffnung oder Querkanal ausgebildet.

Eine Weiterbildung der Erfindung sieht vor, dass die Luftklappe die bereits erwähnte Drehachse aufweist, die zwischen den beiden Klappenblättern und in der Queröffnung oder dem Querkanal, insbesondere in der Ebene der Queröffnung, liegt.

Bevorzugt verlaufen die beiden Luftkanäle parallel zueinander. Insbesondere verlaufen sie aneinandergrenzend. Es kann insbesondere vorgesehen sein, dass die beiden Luftkanäle in der Einbaustellung des raumlufttechnischen Geräts übereinanderliegend verlaufen. Bevorzugt sind die beiden Luftkanäle mittels einer gemeinsamen Trennwand voneinander abgetrennt. In dieser Trennwand ist insbesondere die Queröffnung ausgebildet.

Das raumlufttechnische Gerät kann als dezentrales lufttechnisches Gerät ausgebildet sein. Dies bedeutet, dass ihm keine Luft einer zentralen Luftaufbereitung zugeführt wird, sondern dass es eigenständig Luft ansaugt, insbesondere Außenluft, und ebenfalls eigenständig Luft aus einem Raum oder dergleichen abführt, insbesondere Abluft, vorzugsweise Raumluft. Die Außenluft wird insbesondere als Zuluft dem Raum zugeführt; die Abluft wird insbesondere als Fortluft in die Außenumgebung eines den Raum aufweisenden Gebäudes abgegeben. Gegebenenfalls erfolgt ferner ein Umluftbetrieb.

Der eine Luftkanal bildet vorzugsweise einen Fortluftkanal und der andere Luftkanal einen Außenluftkanal. Der Fortluftkanal dient zum Führen von Fortluft; der Außenluftkanal zum Führen von Außenluft.

Das raumlufttechnische Gerät weist ferner bevorzugt einen Zuluftkanal und einen Abluftkanal auf. Der Zuluftkanal dient zum Führen von Zuluft und der Abluftkanal zum Führen von Abluft.

Das raumlufttechnische Gerät weist ferner einen Wärmetauscher und eine Wärmerückgewinnungseinrichtung auf. Der Wärmetauscher dient dazu, Außenluft, die beispielsweise im Winter eine relativ niedrige Temperatur aufweisen kann, aufzuheizen, damit eine entsprechend temperierte Zuluft in den Raum eingebracht werden kann. Die Wärmerückgewinnungseinrichtung dient dazu, die Wärme von aus dem Raum stammender Abluft, insbesondere Raumluft, an die Außenluft, die dem Raum zugeführt wird, zu übertragen, wodurch eine entsprechend hohe Zulufttemperatur realisiert wird, welche im Falle des Vorhandenseins eines Wärmetauschers optional noch höher temperiert werden kann. Natürlich kann die Wärmerückgewinnungseinrichtung bei hohen Außenlufttemperaturen auch dazu genutzt werden, die Außenluft mittels Abluft zu kühlen. Der Wärmetauscher - falls vorhanden - kann optional kühlen.

Die Anordnung ist vorzugsweise derart getroffen, dass der Abluftkanal mit dem Fortluftkanal und dass der Zuluftkanal mit dem Außenluftkanal zusammenwirkt. Dies bedeutet, dass Außenluft über den Außenluftkanal des raumlufttechnischen Geräts in das Innere des raumlufttechnischen Geräts eingebracht und als Zuluft durch den Zuluftkanal des raumlufttechnischen Geräts in den Raum einströmt. Raumluft wird als Abluft über den Abluftkanal des raumlufttechnischen Geräts in das Innere des raumlufttechnischen Geräts eingebracht und von dort über den Fortluftkanal des raumlufttechnischen Geräts in die Außenatmosphäre geblasen.

Eine Weiterbildung der Erfindung sieht vor, dass die Wärmerückgewinnungseinrichtung strömungstechnisch zwischen Abluftkanal und Fortluftkanal einerseits und Außenluftkanal und Zuluftkanal andererseits liegt. Hierdurch findet ein Wärmeaustausch zwischen der aus dem Raum abgeführten und der dem Raum zugeführten Luft statt.

Das raumlufttechnische Gerät besitzt bevorzugt eine erste Luftfördereinrichtung, die dem Abluftkanal und dem Fortluftkanal zugeordnet ist. Sie fördert Luft, die - aus dem Raum kommend - zunächst den Abluftkanal und im Anschluss daran den Fortluftkanal durchströmt.

Ferner ist vorgesehen, dass das raumlufttechnische Gerät eine zweite Luftfördereinrichtung aufweist, die dem Zuluftkanal und dem Außenluftkanal zugeordnet ist. Mit der zweiten Luftfördereinrichtung wird demzufolge Außenluft durch den Außenluftkanal und anschließend durch den Zuluftkanal gefördert, sodass die Außenluft als Zuluft in den Raum gelangt.

Der Wärmetauscher befindet sich bevorzugt im Zuluftkanal.

Die beiden Luftkanäle weisen bevorzugt seitlich aneinandergrenzende Luftöffnungen auf, von denen die eine eine Fortluftöffnung und die andere eine Außenluftöffnung ist. Die Fortluftöffnung ist dem Fortluftkanal und die Außenluftöffnung dem Außenluftkanal zugeordnet. Fortluftkanal mit Fortluftöffnung und Außenluftkanal mit Außenluftöffnung gehören dem raumlufttechnischen Gerät an, das heißt derartige, vorzugsweise in der Fassade des Gebäudes liegende Kanäle und Öffnungen sind nicht unabhängig von dem Gerät ausgebildet, sondern baueinheitlich mit diesem. Bevorzugt sind Abluftkanal mit Abluftöffnung und Zuluftkanal mit Zuluftöffnung ebenfalls baueinheitlich im raumlufttechnischen Gerät ausgebildet.

Da - wie vorstehend erwähnt - Fortluftöffnung und Außenluftöffnung sehr nahe, insbesondere seitlich aneinandergrenzend zueinander angeordnet sind, ist insbesondere vorgesehen, dass der Fortluftöffnung und/oder der Außenluftöffnung eine Kurzschlussluftführung vermeidende Luftlenkmittel zugeordnet sind. Durch entsprechende Lenkung der Luft wird verhindert, dass aus der Fortluftöffnung ausgestoßene Fortluft mittels der Außenluftöffnung ganz oder teilweise wieder angesaugt wird. Insbesondere wird der Fortluftstrom derart schräg und weggerichtet von der Außenluftöffnung ausgeblasen, dass mit letzterer diese ausgestoßene Luft nicht oder nicht in erheblichem Maße angesaugt wird.

Eine Weiterbildung der Erfindung sieht vor, dass der Fortluftkanal und/oder der Außenluftkanal, insbesondere im Bereich der Fortluftöffnung und/oder Außenluftöffnung, Feuchtigkeitsrückhaltemittel aufweist/aufweisen. Diese Feuchtigkeitsrückhaltemittel sorgen dafür, dass Regen, Tau, Schmelzwasser und so weiter nicht weit in das Innere des raumlufttechnischen Geräts eindringen kann. Die Feuchtigkeitsrückhaltemittel können vorzugsweise von geeigneten Ablaufflächen und/oder Rückhaltestufen gebildet sein, sodass kurzwegig eingedrungene Feuchtigkeit wieder abfließt beziehungsweise gestoppt wird und dadurch ein tieferes Eindringen von Feuchtigkeit in das raumlufttechnische Gerät verhindert ist.

Schließlich ist es vorteilhaft, dass das raumlufttechnische Gerät einen als Doppelschalldämpfer ausgebildeten Schalldämpfer mit zwei Luftwegen aufweist, denen eine gemeinsame Kulisse zugeordnet ist. Dieser Doppelschalldämpfer befindet sich stromaufwärts der ersten Luftfördereinrichtung und stromabwärts der zweiten Luftfördereinrichtung, sodass im Betrieb nur ein sehr niedriger Schalldruckpegel im Raum auftritt, der ≤ 35 dB(A) ist. Derartige geringe Schalldruckpegel werden erzielt, auch wenn ein sehr hoher Luftaustausch mit dem raumlufttechnischen Gerät von etwa 600 m³/h oder weniger erzielt ist. Der Doppelschalldämpfer befindet sich bevorzugt im Abluftund Zuluftkanal.

Die Erfindung betrifft ferner ein Verfahren nach Anspruch 13 zum Betreiben eines raumlufttechnischen Geräts, wie vorstehend beschrieben . Insbesondere kann vorgesehen sein, dass bei geöffneter Querverbindung ein Umluftbetrieb gefahren wird, das heißt, das raumlufttechnische Gerät führt über die geöffnete Querverbindung zumindest einen Teil der Abluft der geförderten Außenluft zu, sodass eine entsprechende Temperierung der Außenluft erfolgt und die so gebildete Mischluft als Zuluft in den Raum gelangt. Schließlich ist es vorteilhaft, wenn die Wärmerückgewinnungseinrichtung des raumlufttechnischen Geräts durch den Umluftbetrieb derart betrieben wird, dass ihre mögliche Vereisung verringert oder verhindert wird. Wird beispielsweise sehr kalte Außenluft angesaugt, so kann dies zu einer Vereisung der Wärmerückgewinnungseinrichtung führen. Wird jedoch im Umluftbetrieb wärmere, abzuführende Raumluft, also Abluft, der Außenluft durch die Querverbindung zugeführt, bevor diese die Wärmerückgewinnungseinrichtung durchströmt, so tritt in die Wärmerückgewinnungseinrichtung entsprechend temperierte Mischluft (Außenluft plus Abluft) ein, sodass eine Vereisung verringert oder verhindert ist.

Die Zeichnungen veranschaulichen die Erfindung anhand von Ausführungsbeispielen, und zwar zeigt:
- Figur 1: eine Schnittansicht durch ein raumlufttechnisches Gerät entlang der Linie I-I der Figur 2,
- Figur 2: eine Draufsicht auf das raumlufttechnische Gerät,
- Figur 3: eine Detailschnittansicht des raumlufttechnischen Geräts im Bereich einer Verschlusseinrichtung,
- Figur 4: eine Detailschnittansicht des raumlufttechnischen Geräts im Bereich eines Zuluftkanals und eines Abluftkanals,
- Figuren 5 bis 11: verschiedene Ausgestaltungen und Anordnungen des raumlufttechnischen Geräts in einem zu belüftenden/zu klimatisierenden Raum eines Gebäudes oder dergleichen.

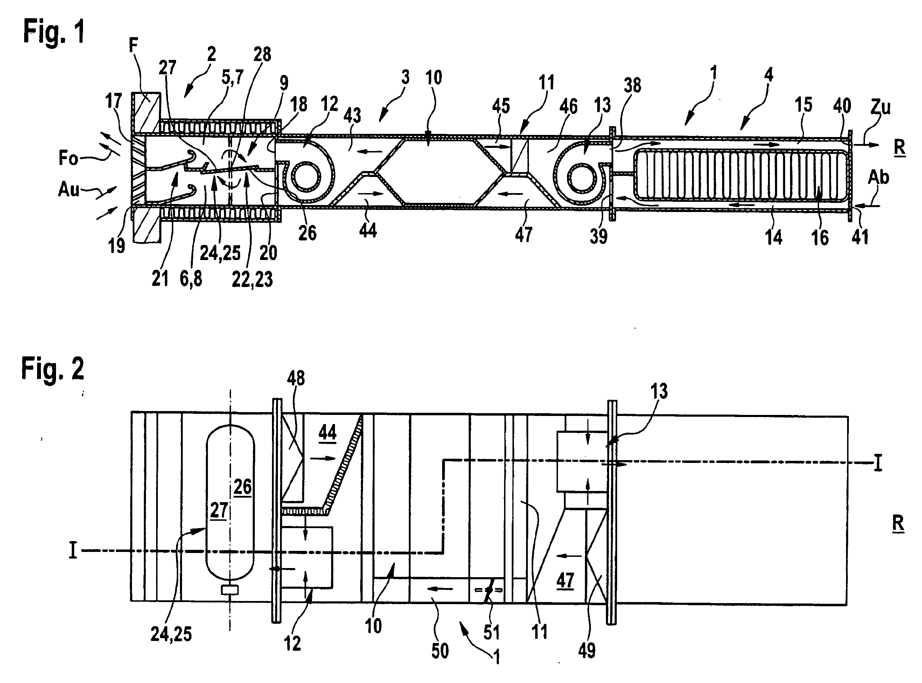

Die Figuren 1 und 2 zeigen ein raumlufttechnisches Gerät 1. Das Gerät 1 kann aus drei einzelnen, jedoch miteinander verbundenen Geräteabschnitten 2 bis 4 - wie in den Figuren 1 und 2 dargestellt - bestehen oder als insgesamt baueinheitliches Gerät, also nicht mit mehreren Geräteabschnitten, sondern einem gemeinsamen Gehäuse ausgebildet sein.

Das raumlufttechnische Gerät 1 weist einen ersten Luftkanal 5 und einen zweiten Luftkanal 6 auf, wobei der erste Luftkanal 5 ein Fortluftkanal 7 und der zweite Luftkanal 6 ein Außenluftkanal 8 ist. Den beiden Luftkanälen 5 und 6 ist eine Verschlusseinrichtung 9 zugeordnet. Im Falle einer dreiteiligen Gehäuseausbildung 1 befinden sich die Luftkanäle 5 und 6 im Geräteabschnitt 2.

Das raumlufttechnische Gerät 1 weist ferner eine Wärmerückgewinnungseinrichtung 10, einen Wärmetauscher 11, eine erste Luftfördereinrichtung 12 und eine zweite Luftfördereinrichtung 13 auf. Diese vorstehend genannten Bauteile sind bei dreiteiliger Ausgestaltung des Geräts 1 dem mittleren Geräteabschnitt 3 zugeordnet.

Das raumlufttechnische Gerät 1 weist schließlich einen Abluftkanal 14 und einen Zuluftkanal 15 auf, wobei den beiden Kanälen ein Schalldämpfer 16, vorzugsweise gemeinschaftlich, zugeordnet ist. Abluftkanal 14, Zuluftkanal 15 und Schalldämpfer 16 gehören bei dreiteiliger Geräteausbildung dem Geräteabschnitt 4 an.

Der Fortluftkanal 7 weist eine Fortluftöffnung 17 und eine Anschlussöffnung 18 auf; der Außenluftkanal 8 besitzt eine Außenluftöffnung 19 und eine Anschlussöffnung 20. Die Anordnung ist derart getroffen, dass in der aus der Figur 1 hervorgehenden möglichen Einbaulage des Geräts 1 der Fortluftkanal 7 oberhalb des Außenluftkanals 8 liegt. Unabhängig davon grenzen Fortluftkanal 7 und Außenluftkanal 8 unmittelbar aneinander, das heißt, die beiden Luftkanäle 5 und 6 verlaufen parallel und aneinandergrenzend zueinander. Sie werden durch eine gemeinsame Trennwand 21 voneinander abgetrennt. In der Trennwand 21 befindet sich eine Querverbindung 22, die als Queröffnung 23 ausgebildet ist. Der Queröffnung 23 sowie entsprechend zugehörigen Abschnitten der beiden Luftkanäle 5 und 6 ist die Verschlusseinrichtung 9 zugeordnet.

Die Verschlusseinrichtung 9 weist eine Luftklappe 24 auf, die als Doppelklappe 25 ausgebildet ist und zwei Klappenblätter 26 und 27 besitzt. Das Klappenblatt 26 wirkt - stellungsabhängig - mit dem ersten Luftkanal 5 und das Klappenblatt 27 - entsprechend stellungsabhängig - mit dem zweiten Luftkanal 6 zusammen. Ferner wirken beide Klappenblätter 26 und 27 mit der Querverbindung 22, insbesondere Queröffnung 23 - und dies ebenfalls stellungsabhängig - zusammen. Die Luftklappe 24 weist eine Drehachse 28 auf, die zwischen den beiden Klappenblättern 26 und 27 und in der Ebene der Queröffnung 23 liegt. Die Drehachse 28 befindet sich mittig in der Queröffnung. Befindet sich die Doppelklappe 25 in der in der Figur 1 mit durchgezogener Linie dargestellten Stellung, so verschließt sie die Queröffnung 23; befindet sich die Doppelklappe 25 in der in der Figur 1 gestrichelt dargestellten Stellung, so verschließt das Klappenblatt 26 den ersten Luftkanal 5 und das Klappenblatt 27 den Luftkanal 6, wobei die Queröffnung 23 voll geöffnet ist, das heißt, es kann ein Luftaustausch zwischen den entsprechenden zugeordneten Abschnitten der Luftkanäle 5 und 6 erfolgen. Für jeden der beidseitig der Luftklappe 24 liegenden Abschnitte der Luftkanäle 5 und 6 steht für eine derartige Luftaustauschverbindung demzufolge der halbe Querschnitt der gesamten Queröffnung 23 zur Verfügung. Dieser Umstand kommt im Anspruch 1 dadurch zum Ausdruck, dass in der gestrichelten Stellung der Doppelklappe 25 der Figur 1 eine erste Stellung vorliegt, bei der die Querverbindung 23 "zumindest teilweise" geöffnet ist, da ja nicht für jeden der Abschnitte der Luftkanäle 5 und 6 der volle Querschnitt der Queröffnung 23 zur Verfügung steht. Selbstverständlich kann die Luftklappe 24 in Zwischenstellungen verdreht werden, bei denen - in Abhängigkeit vom Klappenwinkel - ein teilweise erfolgendes Öffnen der Luftkanäle 5 und 6 sowie der Queröffnung 23 vorliegt.

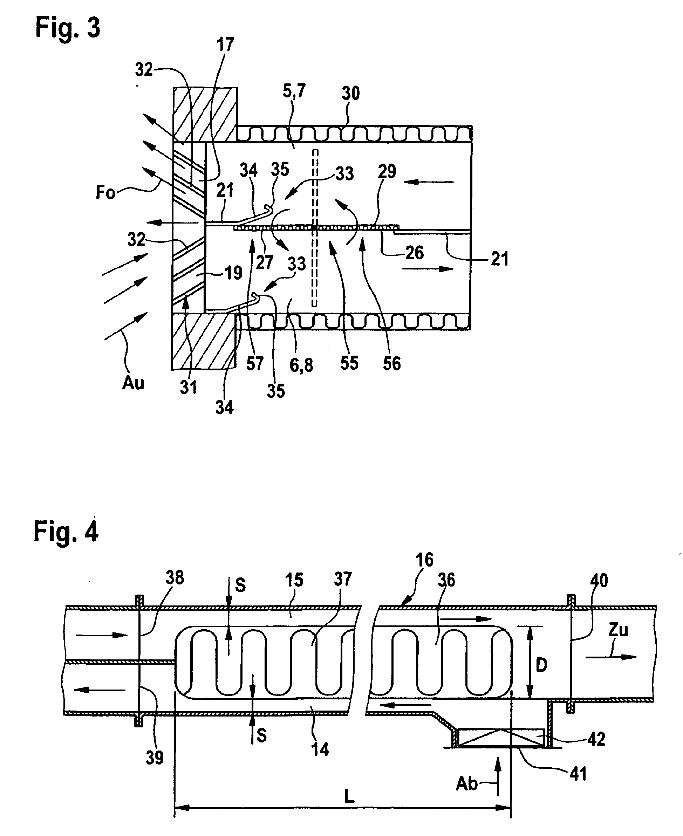

Gemäß Figur 3 kann die Luftklappe 24 mit einer Wärmeisolierung/Schallisolierung 29 versehen sein. Ferner kann der Geräteabschnitt 2 an seiner Außenseite eine Wärme-/Schallisolierung 30 besitzten. Der Figur 3 ist ferner zu entnehmen, dass die Fortluftöffnung 17 und die Außenluftöffnung 19 mit Luftlenkmitteln 31 versehen sind, derart, dass aus der Fortluftöffnung 17 austretende Fortluft Fo schräg und weg von Außenluft Au ausgeblasen wird, welche mittels der Außenluftöffnung 19 angesaugt wird. Die Luftlenkmittel 31 bestehen aus entsprechend gerichteten Lamellen 32.

Ferner ist aus Figur 3 erkennbar, dass Fortluftkanal 7 und Außenluftkanal 8 mit Feuchtigkeitsrückhaltemitteln 33 versehen sind. Diese Feuchtigkeitsrückhaltemittel 33 bestehen vorzugsweise aus schräg nach oben laufenden Kanalwandungen 34 und 35 der beiden Luftkanäle 5 und 6 sowie zugehörige, nach oben weisende Feuchtigkeitsrückhaltestufen 35. Die Schwenkmöglichkeit der Doppelklappe 25 ist in den Figuren 1 und 3 mit gekrümmten Pfeilen dargestellt, wobei in der Figur 1 die Pfeile in Richtung der Öffnungsstellung und in der Figur 3 die Pfeile in Richtung der Schließstellung im Hinblick auf die beiden Luftkanäle 5 und 6 weisen. Ist - gemäß Figur 3 - die Doppelklappe 25 in Richtung der dort gezeigten gekrümmten Pfeile verschwenkt (gestrichelte Stellung), so ragen die beiden Klappenblätter 26 und 27 in die Luftkanäle 5 und 6 hinein, derart, dass diese hinsichtlich ihrer Querschnitte versperrt sind. In der mit durchgezogener Linie in Figur 3 dargestellten geschlossenen Stellung der Doppelklappe 25 fluchtet die Ebene der Doppelklappe 25 mit der Trennwand 21.

Gemäß der Figuren 1 und 2 sowie gemäß Figur 4 weist das raumlufttechnische Gerät im Bereich des Abluftkanals 14 und des Zuluftkanals 15 den Schalldämpfer 16 auf. Dieser ist als Doppelschalldämpfer 36 derart ausgebildet, dass er als Kulisse unter entsprechender Verkleinerung der Querschnitte von Abluftkanal 14 und Zuluftkanal 15 eine Längsabtrennung zwischen den genannten Kanälen bildet. Es handelt sich demzufolge um eine gemeinsame Kulisse 37 aus geeignetem Schalldämmmaterial mit der Dicke D, sodass als Kanalquerschnitte noch die Höhen S und die entsprechende jeweilige Gerätebreite für den Abluftkanal 14 und den Zuluftkanal 15 im Bereich des Schalldämpfers 16 zur Verfügung stehen. Der Zuluftkanal 15 besitzt eine Anschlussöffnung 38 und der Abluftkanal 14 eine Anschlussöffnung 39. Ferner ist der Zuluftkanal 15 mit einer Zuluftöffnung 40 und der Abluftkanal 14 mit einer Abluftöffnung 41 versehen. Aus der Zuluftöffnung 40 kann Zuluft Zu austreten; in die Abluftöffnung 41 kann Abluft Ab eintreten. Die Abluftöffnung 41 kann mit einem Abluftfilter 42 versehen sein. In der Figur 4 weisen Zuluftöffnung 40 und Abluftöffnung 41 in unterschiedliche Richtungen. Es sind jedoch auch Bauformen denkbar, in denen Zuluftöffnung 40 und Abluftöffnung 41 seitlich nebeneinander liegend angeordnet sind und ihre Ebenen in Richtung der Längserstreckung des Geräts 1 oder quer zur Längserstreckung des Geräts 1 liegen.

Der Geräteabschnitt 4 des raumlufttechnischen Geräts 1 weist gemäß der Figuren 1 und 2 Luftwege 43, 44, 45, 46 und 47 auf, entlang denen eine entsprechende Luftführung - auf die noch eingegangen wird - möglich ist. So steht der Luftweg 44 mit der Anschlussöffnung 20 des Außenluftkanals in Verbindung und führt eingangsseitig zur Wärmerückgewinnungseinrichtung 10. Ausgangsseitig der Wärmerückgewinnungseinrichtung 10 schließt der Luftweg 45 an, der zum Wärmetauscher 11 führt, der ausgangsseitig an den Luftweg 46 angrenzt, der zur zweiten Luftfördereinrichtung 13 führt, die ausgangsseitig an die Anschlussöffnung 38 des Zuluftkanals 15 angeschlossen ist. Die Anschlussöffnung 39 des Abluftkanals 14 steht mit dem Luftweg 47 strömungstechnisch in Verbindung, der eingangsseitig zur Wärmerückgewinnungseinrichtung 10 führt, die ausgangsseitig mit dem Luftweg 43 strömungstechnisch in Verbindung steht, wobei der Luftweg 43 eingangsseitig zur Luftfördereinrichtung 12 führt, deren Ausgang an die Anschlussöffnung 18 des Fortluftkanals 7 angeschlossen ist. Die Wärmerückgewinnungseinrichtung 10 ist als Kreuzstromwärmetauscher oder Wärmerad ausgebildet. Die beiden Luftfördereinrichtungen 12 und 13 werden von Ventilatoren gebildet.

Für die Steuerung der Stellung der Doppelklappe 15, das Ein- und Ausschalten oder Steuern oder Regeln der beiden Luftfördereinrichtungen 12 und 13, für die Wärmerückgewinnungseinrichtung 10 und für den Wärmetauscher 11 sind entsprechende Steuer- oder Regelungsmittel im Gerät 1 vorhanden, die die einzelnen, genannten Komponenten nach einem entsprechenden Steuer- oder Regelkonzept in Abhängigkeit von der gewünschten Betriebsweise betreiben. Aus Figur 2 geht hervor, dass sich im Luftweg 44 ein Luftfilter 48 und im Luftweg 47 ein Luftfilter 49 zur Filterung entsprechender Luftströme befinden kann. Gemäß Figur 2 kann ferner optional ein Bypass 50 vorgesehen sein, mit dem bei Bedarf mittels Steuerung/Regelung einer entsprechenden Luftklappe 51 die Wärmerückgewinnungseinrichtung 10 betriebsartenabhängig umgangen werden kann, um Abluft an der Wärmerückgewinnungseinrichtung 10 vorbeizuführen.

Es ergibt sich folgende Funktion: Es wird davon ausgegangen, dass das raumlufttechnische Gerät 1 einem Raum R zur Belüftung beziehungsweise Klimatisierung zugeordnet ist, wobei es derart angeordnet ist, dass Fortluftöffnung 17 und Außenluftöffnung 19 im Bereich einer Fassade F des Raumes R liegen, das heißt, bauseits sind für den Lufteintritt und -austritt keine besonderen Maßnahmen zu ergreifen, da beispielsweise Fortluftöffnung 17 und Außenluftöffnung 19 geräteseits vorhanden sind. In einer in der Figur 1 dargestellten zweiten Stellung der Luftklappe 24 sind die Querschnitte der beiden Luftkanäle 5 und 6 ganz geöffnet und die Querverbindung 22, das heißt die Queröffnung 23, ist ganz geschlossen. Mittels der zweiten Luftfördereinrichtung 13 wird Außenluft Au angesaugt, die den Außenluftkanal 8 passiert, in den Luftweg 44 gelangt, die Wärmerückgewinnungseinrichtung 10 durchsetzt, zum Luftweg 45 strömt, den Wärmetauscher 11 passiert, in den Luftweg 46 eintritt, die Luftfördereinrichtung 13 durchsetzt, den Zuluftkanal 15 durchsetzt und aus der Zuluftöffnung 40 austritt und als Zuluft Zu in den Raum R gelangt. Mittels der ersten Fördereinrichtung 12 wird Raumluft als Abluft Ab an der Abluftöffnung 41 angesaugt, die den Abluftkanal 14 durchsetzt, in den Luftweg 47 gelangt, die Wärmerückgewinnungseinrichtung 10 durchsetzt, in den Luftweg 43 eintritt, die Luftfördereinrichtung 12 durchströmt, in den Fortluftkanal 7 gelangt und aus der Fortluftöffnung 17 als Fortluft Fo derart gelenkt in die Außenatmosphäre austritt, dass kein Kurzschluss zur angesaugten Außenluft Au besteht. In Abhängigkeit eines gewünschten Heiz- oder Kühleffekts wird der Wärmetauscher 11 betrieben. Zwischen der in den Raum einströmenden und in der aus dem Raum ausströmenden Luft findet mittels der Wärmerückgewinnungseinrichtung 10 ein Wärmetausch statt. Befindet sich die Verschlusseinrichtung 9 in einer ersten Stellung, das heißt, befindet sich die Doppelklappe 25 in der aus der Figur 1 gestrichelt hervorgehenden Position, so sind die Querschnitte von Fortluftkanal 7 und Außenluftkanal 8 geschlossen und die beiden Teilquerschnitte der Queröffnung 23 voll geöffnet. Die beiden Teilquerschnitte ergeben sich dadurch, dass die gesamte Queröffnung 23 aufgrund der Drehachse 28 der Doppelklappe 25 in zwei aneinandergrenzende Bereiche unterteilt wird. Demzufolge stehen gemäß Figur 1 linksseitig der Doppelklappe 25 entsprechende Abschnitte von Fortluftkanal 7 und Außenluftkanal 8 strömungstechnisch über den entsprechenden Bereich der Queröffnung 23 miteinander in Verbindung, was jedoch für die Betriebsführung des Geräts 1 weniger von Bedeutung ist. Anders hingegen verhält es sich rechtsseitig der Luftklappe 24, denn dort stehen entsprechende Abschnitte des Fortluftkanals 7 und Außenluftkanal 8 ebenfalls über den entsprechenden Bereich der Queröffnung 23 strömungstechnisch miteinander in Verbindung, derart, dass der im Fortluftkanal 7 geführte Luftstrom, also die Fortluft, über den Bereich der Queröffnung 23 in den entsprechenden Abschnitt des Außenluftkanals 8 eintritt und - wie vorstehend erläutert - in den Raum R rückgeführt wird. Hierdurch ist ein Umluftbetrieb mit dem raumlufttechnischen Gerät 1 auf sehr einfache Art und Weise realisiert. Es bleibt als weitere Betriebsarten festzuhalten, dass sich - je nach Betriebsführung - auch Zwischenstellungen der Luftklappe 24 ergeben können, in denen die Doppelklappe 25 weder die Luftkanäle 5 und 6 vollständig verschließt, noch die Queröffnung 23 vollständig verschließt. Je nach Klappenwinkel erfolgt dann eine Kombination von Umluftbetrieb und Normalbetrieb, der vorstehend bereits erläutert wurde.

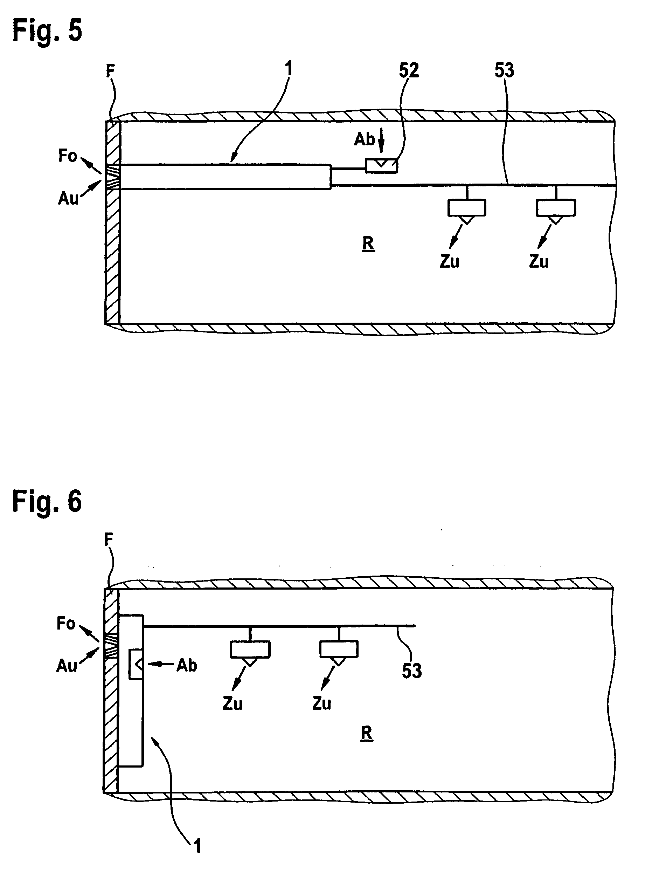

Die Figuren 5 bis 11 zeigen unterschiedliche Ausgestaltungen und Anordnungen des lufttechnischen Geräts 1 in dem zu belüftenden/zu klimatisierenden Raum R eines Gebäudes oder dergleichen. Die Figur 5 zeigt, dass das Gerät 1 als Deckengerät ausgebildet ist und dass die Abluft im Bereich der Decke des Raumes und die Zuluft ebenfalls im Bereich der Decke des Raumes eintritt beziehungsweise austritt. Für die Führung der Abluft zum Gerät 1 ist eine entsprechende Luftführungseinrichtung 52 und für die Luftführung der Zuluft eine entsprechende Luftführungseinrichtung 53 vorgesehen, wobei die Zuluft aus zwei Auslässen austritt. Natürlich ist es denkbar, dass auch weniger oder mehr Auslässe beziehungsweise Einlässe (für die Abluft) vorgesehen sein können. Die vorstehenden Ausführungen gelten entsprechend für alle weiteren Ausführungsbeispiele gemäß der Figuren 6 bis 11.

Die Figur 6 zeigt die Anordnung des Geräts 1 im Bereich der Fassade F des Raums R, wobei sich die Längsachse des Geräts 1 parallel zur Längserstreckung der Fassade erstreckt. Die Abluft tritt unmittelbar in das Gerät 1 ein; die Zuluft wird über eine Luftführungseinrichtung 53 dem Raum R zugeführt. Die Abluft Au wird im Deckenbereich des Raumes R abgeführt und die Zuluft Zu strömt im Deckenbereich in den Raum R ein.

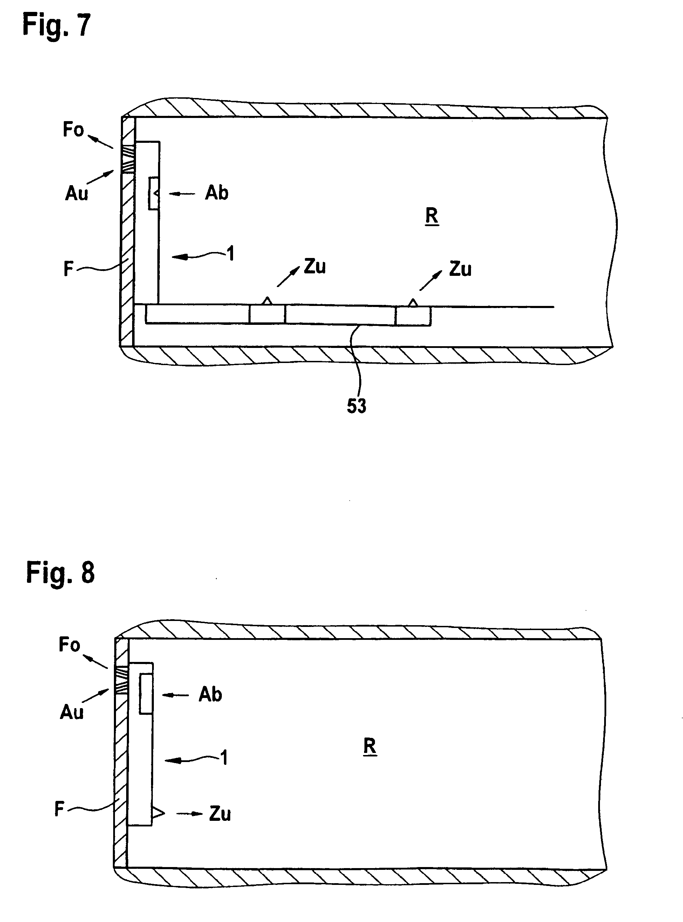

Die Figur 7 entspricht der Ausführung der Figur 6, sodass hierauf verwiesen wird und die Ausführungen entsprechend gelten. Unterschiedlich ist, dass die Abluft im Deckenbereich des Raumes R abgesaugt wird und die Zuluft Zu im unteren Bereich, insbesondere im Bodenbereich des Raumes R, in den Raum R eintritt.

Das Ausführungsbeispiel der Figur 8 betrifft eine Ausgestaltung, bei der das Gerät 1 ebenfalls ein Fassadengerät bildet, wobei die Abluft im Deckenbereich des Raumes R abgesaugt wird und die Zuluft im Brüstungsbereich des Raumes R in diesen eintritt.

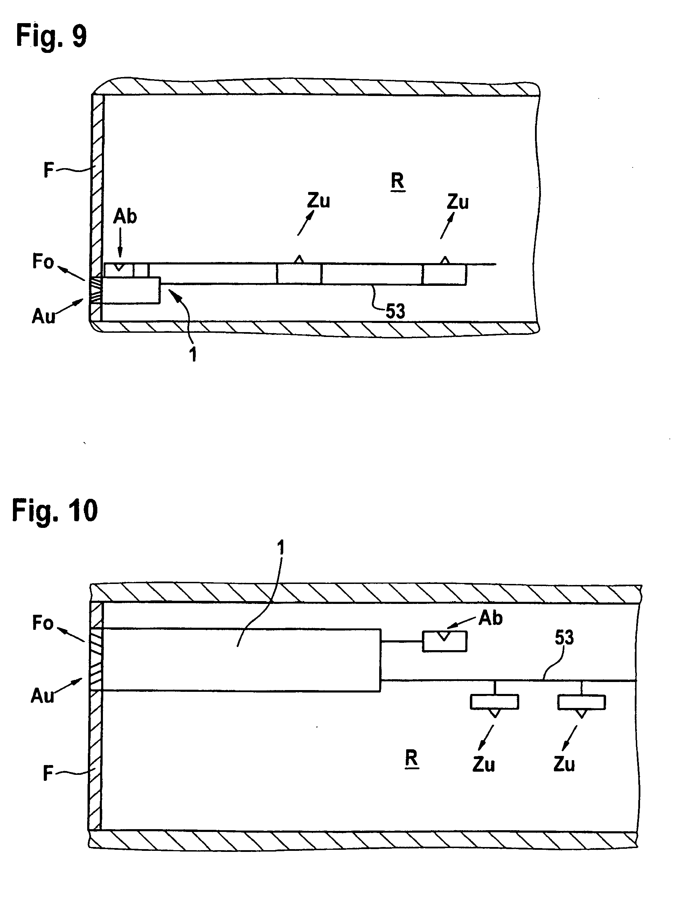

Das Ausführungsbeispiel der Figur 9 zeigt die Ausbildung des Geräts 1 als Bodengerät, das unterhalb eines Doppel-Fußbodens angeordnet ist. Entsprechend befinden sich Abluftöffnungen und mindestens eine Zuluftöffnung ebenfalls im Bodenbereich des Raumes R.

Beim Ausführungsbeispiel der Figur 10 ist das raumlufttechnische Gerät 1 als Wandgerät im Deckenbereich des Raumes R angeordnet, wobei seine Längserstreckung quer zur Längserstreckung der Fassade verläuft. Die Luftführung erfolgt oben, das heißt die Abluft wird im Deckenbereich des Raumes abgesaugt und die Zuluft im Deckenbereich des Raumes R diesem zugeführt.

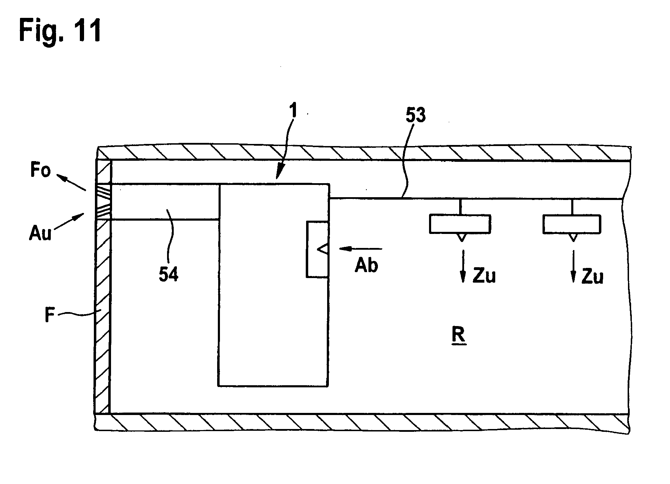

Schließlich zeigt die Figur 11 eine Ausgestaltung, bei der das raumlufttechnische Gerät 1 - ebenso wie beim Ausführungsbeispiel der Figur 10 - ein Wandgerät ist, hier jedoch hinsichtlich seiner Längserstreckung parallel zur Längserstreckung der Fassade F verläuft. Es liegt mit gewissem Abstand zur Fassade F, sodass Anschlusskanäle 54 zur Verlängerung des Fortluftkanals und des Außenluftkanals vorgesehen sind. Die Abluft wird direkt am Gerät 1 im oberen Bereich des Raumes R abgesaugt, die Zuluft tritt mittels Luftführungseinrichtung 53 im Deckenbereich in den Raum R ein.

Mittels des erfindungsgemäßen raumlufttechnischen Geräts 1 kann eine dezentrale Belüftung, insbesondere mit einem Außenluftstrom von vorzugsweise maximal 600 m³/h (entsprechend 20 m³/h/Person) erfolgen. Beispielsweise reicht dies für eine Anzahl von maximal 30 Personen in dem Raum. Mittels der Wärmerückgewinnungseinrichtung lässt sich eine Wärmerückgewinnung mit einer Rückwärmzahl >75 % und optional auch eine Feuchtübertragung durchführen. Die erwähnten Luftfilter sind als Feinfilter, insbesondere gemäß Klasse F7, ausgebildet. Sofern ein niedriger Strombedarf angestrebt ist, können die beiden Ventilatoren die Leistungswerte <1,2 kW/(m³/s) besitzen. Insgesamt lässt sich ein niedriger Schalldruckpegel im Raum R bei 600 m³/h von 35 dB(A) erzielen.

Als Einsatzgebiete lassen sich neben einer Neuerstellung auch insbesondere eine Nachrüstung von Gebäuden realisieren, wobei das raumlufttechnische Gerät als dezentrales Gerät in den Einsatz gelangt. Bevorzugt eignet sich ein derartiges raumlufttechnisches Gerät für Räume mit Grundflächen von 40 bis 80 m². Selbstverständlich sind auch größere Bauformen denkbar, um beispielsweise Büro-Gruppenräume mit Grundflächen von 75 bis 125 m² zu belüften/klimatisieren.

Das Gerät 1 kann vorzugsweise im modularen Aufbau erstellt sein. Als Luftgitter kommt insbesondere ein kombiniertes Wetterschutzgitter für Außen- und Fortluft mit gemeinsamer Regenabscheidung und Ableitung des eingedrungenen Wassers nach außen infrage. Die Fortluft wird mit einem hohen Austrittsimpuls derart weggerichtet zur Außenluft ausgeblasen, dass ein Strömungskurzschluss ausgeschlossen ist. Als Luftklappe 24 kommt vorzugsweise eine Klappe mit stetigem elektrischem Antrieb und Federrücklauf zum Einsatz, sodass eine Schließfunktion vorliegt, wenn der Antrieb aufgrund eines Stromausfalls nicht funktioniert. Insbesondere lässt sich eine stufenlose Einstellung der Doppelklappe 25 vornehmen und damit eine stufenlose Mischung von Außenluft und Raumluft.

Der als Doppelschalldämpfer ausgebildete Schalldämpfer ist kompakt und hat für den Zu- und Abluftstrom eine gemeinsame Mittelkulisse. Er ist abgestimmt auf Frequenzspektren der beiden Ventilatoren, die die erwähnten Luftfördereinrichtungen bilden. Vorzugsweise sind die Ventilatoren baugleich. Der Abluftbereich des Schalldämpfers kann mit einem Anschlussflansch für eine Abluftleitung oder einen Abluftfilter versehen sein. Der Zuluftbereich des Schalldämpfers kann mit einem Anschlussflansch für eine Zuluftleitung versehen sein. Die erwähnten Luftführungseinrichtungen 53 für die Zuluft weisen mindestens eine Luftleitung mit Zuluftauslässen auf. Hierbei kann es sich zum Beispiel um lineare Luftauslässe entlang einer Raumseite des Raumes R oder um zwei bis drei oder mehr Punktauslässe (zum Beispiel drei Drallauslässe) über den Raum verteilt handeln. Insbesondere kommen hochinduktive Luftauslässe für zugluftfreie Belüftung mit -7 K unterhalb Raumtemperatur (14 bis 21°C) infrage.

Wie bereits erwähnt, können Ausführungen des Geräts 1 als Deckengerät, Fassadengerät, Bodengerät oder Innenwandgerät vorgesehen sein. Das Deckengerät wird beispielsweise horizontal eingebaut und weist direkte Anschlüsse an der Fassade auf. Die Luftführung erfolgt innerhalb des Raumes (für Zu- und Abluft) oben. Beim Fassadengerät oder auch Außenwandgerät erfolgt der Einbau vertikal innen an der Fassade. Die Abluftöffnung ist im Gerät eingebaut. Die Zuluft erfolgt über die Decke oder in einem Doppelboden oder in einer Brüstung des Raumes. Beim Bodengerät erfolgt der Einbau im Doppelboden in Horizontalstellung. Die Zuluft tritt im Bodenbereich in dem Raum R ein. Das Innenwandgerät ist vorzugsweise horizontal oder vertikal aufgehängt und weist frei gestaltbare Luftanschlüsse an Fassade und vorzugsweise einen Anschluss an ein Raumlüftungssystem auf.

Aufgrund der erfindungsgemäß ausgestalteten Verschlusseinrichtung 9, insbesondere in Bezug auf die Doppelklappe 25, die als Absperr- und Regel- beziehungsweise Steuerklappe ausgebildet ist, wird nur ein Antrieb für die Außenluft- und Fortluftführung benötigt. Verschließt die Doppelklappe die Queröffnung 23 vollständig, so sind Außenluft und Fortluft vollständig voneinander getrennt.

Befindet sich die Doppelklappe in geschlossener Stellung, derart, dass die Queröffnung 23 ganz geschlossen ist, so entsteht eine dichte Absperrung der Fortluftöffnung 17 und der Außenluftöffnung 19. Damit besteht die Möglichkeit für einen Sekundärluftbetrieb (Umluftbetrieb) ohne Anteile an Außenluft zum Heizen oder Kühlen des Raumes R, beispielsweise wenn dort keine Personen anwesend sind, insbesondere nachts. Es besteht dabei sogar die Möglichkeit, eine der Luftfördereinrichtungen abzuschalten. Die andere Luftfördereinrichtung bleibt für die Luftförderung eingeschaltet. Ferner besteht die Möglichkeit für ein einfaches Abtauen einer vereisten Wärmerückgewinnungseinrichtung beziehungsweise lässt sich durch diese Möglichkeit ein Vereisen der Wärmerückgewinnungseinrichtung vermeiden. Ferner besteht die Möglichkeit der Trocknung des mit flüssigem Kondensat beladenen Wärmetauschers 11 und/oder der Wärmerückgewinnungseinrichtung 10. Ferner besteht die Möglichkeit der Trocknung eines feucht gewordenen Luftfilters oder feucht gewordener Luftfilter.

Möglicherweise auftretende Störfälle im Normalbetrieb, also nicht im Umluftbetrieb, führen zu einem erhöhten Druckverlust und lassen sich insbesondere über einen dafür vorgesehenen Druckschalter überwachen, der im Störfall den Stromkreis für den einen oder für beide Ventilatoren (Luftfördereinrichtungen) unterbricht und auch den Stromkreislauf zum Steuern der Luftklappe 24 unterbricht, sodass der erwähnte Federrücklauf zum Einsatz kommt, wodurch die Öffnungen zur Fassade (Außenluftöffnung und Fortluftöffnung) geschlossen und gleichzeitig die Querverbindung 22 als Bypass für Sekundärluft geöffnet wird.

Bei teilweise geöffneter Luftklappe 24, zum Beispiel 50 %, wird eine höhere Raumheiz- beziehungsweise Raumkühlleistung erzielt, wenn ein kleinerer Außenluftvolumenstrom für die Lüftung/Klimatisierung des Raumes R ausreicht.

Es ist auch in einem solchen Falle ein Enteisungsbetrieb des Wärmetauschers oder der Wärmerückgewinnungseinrichtung bei Anwesenheit von Personen im Raum R mit ausgeglichener Luftbilanz des Raumes R möglich.

Bei teilweise geöffneter Klappe kann auch eine Enteisung der genannten Geräte verhindert werden, wenn die Zulufttemperatur nach der Wärmerückgewinnungseinrichtung durch einen Temperaturregler auf einen festen, einstellbaren Wert, von zum Beispiel 15°C, durch entsprechendes Öffnen der Luftklappe 24 (Beimischung von Raumluft) begrenzt wird. Bei hoher Rückwärmzahl (zum Beispiel >80%) kann auf eine Nacherwärmung der Zuluft verzichtet werden, wenn eine statische Raumheizung die Lüftungsverluste ausgleichen kann. In einem solchen Falle kann gleichzeitig ein möglicherweise nachgeschalteter Wärmetauscher 11 vor Frostschaden geschützt werden.

Die Vorteile der vorstehend erläuterten kombinierten Absperr/Regelklappe (Luftklappe 24), insbesondere zusammen mit dem erwähnten Wetterschutz, sind eine kompakte Einheit, die im Hinblick auf Druckverlust, Akustik und Hygiene hohe Anforderungen erfüllt. Hohe Luftgeschwindigkeiten der Fortluft können zusätzlich oder alternativ zum Ausblasen von eingedrungenem Wasser genutzt werden. Der Einbau des raumlufttechnischen Geräts gestaltet sich im Bereich der Fassade für den Fensterbauer sehr einfach und aufgrund der Umluftmöglichkeit ist eine einfache Lösung gegen Vereisung und für einen doppelt abgesicherten Frostschutz und bei zu kalten Zulufttemperaturen (Zugluftbeschwerden) gegeben.

Der Doppelschalldämpfer 36 für Zu- und Abluft führt zu einem sehr leisen Betrieb des Geräts 1. Dabei ist zu bedenken, dass bei dezentralen Geräten im Raum der über das Gehäuse abgestrahlte Körperschall - bewirkt durch die Ventilatoren - direkt wirksam ist und nur durch Dämpfung der Gehäusewand gemindert werden kann. Der Lüftungsschall der Ventilatoren, der bei 60 bis 70 dB(A) liegen kann, muss über den Schalldämpfer verringert werden. Hierzu sind folgende Vorschläge vorteilhaft: der typisch tieffrequente Ventilatorschall erfordert eine entsprechend große Kulissendicke D von vorzugsweise 200 mm und einem kleinen Kulissenspalt S. Ferner fordert die gewünschte große Dämpfung eine große Kulissenlänge L und der kleine Kulissenspalt S erfordert eine entsprechend große Kulissenbreite, um möglichst kleine Luftgeschwindigkeiten zu erhalten. Die gemeinsame Mittelkulisse des Schalldämpfers erspart Bauhöhe und eine zweite Kulisse. Die erwähnte Kulissenbreite wird durch eine kleine Spaltbreite S (insbesondere 50 mm) und kleine Luftgeschwindigkeiten bestimmt. Die Kulissenbreite entspricht der Breite des raumlufttechnischen Geräts 1. Die Höhe, insbesondere die minimale Höhe, des Geräts 1 wird durch die Mindesthöhe der Ventilatoren bestimmt. Für die Kulissendicke gilt vorzugsweise die Beziehung D = Hₘᵢₙ - 2 S, wobei Hₘᵢₙ die minimale Gehäusehöhe des Geräts 1 und S die Breite des Kulissenspalts ist.

## Patentansprüche

1. Raumlufttechnisches Gerät, das drei, aneinandergereihte Geräteabschnitte (2,3,4) sowie zwei Luftkanäle (5,6) aufweist, wobei die beiden Luftkanäle (5,6) in einem ersten Geräteabschnitt (2) einen Fortluftkanal (7) und einen Außenluftkanal (8) bilden, die mittels einer Verschlusseinrichtung (9) verschließbar oder teilweise oder ganz zu öffnen sind und zum strömungstechnischen Verbinden eine Querverbindung (22) aufweisen, der die Verschlusseinrichtung (9) derart zugeordnet ist, dass diese in einer ersten Stellung die Querschnitte von Fortluftkanal (7) und Außenluftkanal (8) verschließt und dabei die Querverbindung (22) zumindest teilweise öffnet und in mindestens einer zweiten Stellung die Querschnitte von Fortluftkanal (7) und Außenluftkanal (8) ganz oder teilweise öffnet und dabei die Querverbindung (22) ganz oder teilweise schließt, und mit einem zweiten, mittleren Geräteabschnitt (3), der eine Wärmerückgewinnungseinrichtung (10), einen Wärmetauscher (11) und zwei, den Luftkanälen (5,6) im zweiten Geräteabschnitt (3) zugeordnete Luftfördereinrichtungen (12,13) aufweist, sowie mit einem dritten Geräteabschnitt (4), der als Luftkanäle (5,6) einen Abluftkanal (14) und einen Zuluftkanal (15) aufweist, denen ein Schalldämpfer (16) gemeinschaftlich zugeordnet ist.

2. Raumlufttechnisches Gerät nach Anspruch 1, **dadurch gekennzeichnet, dass** die Verschlusseinrichtung (9) eine Luftklappe (24) aufweist, die als zwei Klappenblätter (26,27) aufweisende Doppelklappe (25) ausgebildet ist, wobei ein Klappenblatt (26,27) mit dem ersten Luftkanal (5) und das andere Klappenblatt (27,26) mit dem zweiten Luftkanal (6) zusammenwirkt.

3. Raumlufttechnisches Gerät nach einem der vorhergehenden Ansprüche, **dadurch gekennzeichnet, dass** beide Klappenblätter (26,27) mit der Querverbindung (22) zusammenwirken.

4. Raumlufttechnisches Gerät nach einem der vorhergehenden Ansprüche, **dadurch gekennzeichnet, dass** die Querverbindung (22) einen Verbindungsquerschnitt (55) aufweist, der sich aus zwei Teilquerschnitten (56,57) zusammensetzt, wobei der eine Teilquerschnitt (56,57) mit dem einen Klappenblatt (26) und der andere Teilquerschnitt (57,56) mit dem anderen Klappenblatt (27) zusammenwirkt.

5. Raumlufttechnisches Gerät nach einem der vorhergehenden Ansprüche, **dadurch gekennzeichnet, dass** die Querverbindung (22) als Queröffnung (23) oder Querkanal ausgebildet ist.

6. Raumlufttechnisches Gerät nach einem der vorhergehenden Ansprüche, **dadurch gekennzeichnet, dass** die Luftklappe (24) eine Drehachse (28) aufweist, die zwischen den beiden Klappenblättern (26,27) und in der Queröffnung (23) oder dem Querkanal, insbesondere in der Ebene der Queröffnung (23), liegt.

7. Raumlufttechnisches Gerät nach einem der vorhergehenden Ansprüche, **dadurch gekennzeichnet, dass** die beiden Luftkanäle (5,6) mittels einer gemeinsamen Trennwand (21) voneinander abgetrennt sind.

8. Raumlufttechnisches Gerät nach einem der vorhergehenden Ansprüche, **dadurch gekennzeichnet, dass** in der Trennwand (21) die Queröffnung (23) liegt.

9. Raumlufttechnisches Gerät nach einem der vorhergehenden Ansprüche, **gekennzeichnet durch** die Ausbildung als dezentrales lufttechnisches Gerät (1).

10. Raumlufttechnisches Gerät nach einem der vorhergehenden Ansprüche, **dadurch gekennzeichnet, dass** der eine Luftkanal (5) ein Fortluftkanal (7) und der andere Luftkanal (6) ein Außenluftkanal (8) ist.

11. Raumlufttechnisches Gerät nach einem der vorhergehenden Ansprüche, **dadurch gekennzeichnet, dass** die beiden Luftkanäle (5,6) seitlich aneinandergrenzende Luftöffnungen aufweisen, von denen die eine eine Fortluftöffnung (17) und die andere eine Außenluftöffnung (19) ist.

12. Raumlufttechnisches Gerät nach einem der vorhergehenden Ansprüche, **dadurch gekennzeichnet, dass** der Fortluftöffnung (17) und/oder der Außenluftöffnung (19) eine Kurzschlussluftführung vermeidende Luftlenkmittel (31) zugeordnet sind.

13. Verfahren zum Betreiben eines raumlufttechnischen Geräts, nach einem oder mehreren der vorhergehenden Ansprüche, mit einem ersten und einem zweiten Luftkanal, wobei die beiden Luftkanäle mittels einer Verschlusseinrichtung verschließbar oder teilweise oder ganz zu öffnen sind, wobei in einer ersten Stellung der Verschlusseinrichtung (9) die Querschnitte beider Luftkanäle (5,6) verschlossen und dabei eine Querverbindung (22) der Luftkanäle (5,6) zumindest teilweise geöffnet wird und in mindestens einer zweiten Stellung der Verschlusseinrichtung (9) die Querschnitte beider Luftkanäle (5,6) ganz oder teilweise geöffnet werden und dabei die Querverbindung (22) ganz oder teilweise geschlossen wird.

14. Verfahren nach Anspruch 13, **dadurch gekennzeichnet, dass** bei geöffneter Querverbindung (22) ein Umluftbetrieb gefahren wird.

15. Verfahren nach einem der vorhergehenden Ansprüche, **dadurch gekennzeichnet, dass** eine Wärmerückgewinnungseinrichtung (10) des raumlufttechnischen Geräts (1) durch den Umluftbetrieb derart betrieben wird, dass ihre mögliche Vereisung verringert oder verhindert wird.

## Claims

1. A device concerning ventilation, which has three device sections (2, 3, 4) that are strung together, as well as two air ducts (5, 6), wherein, in a first device section (2), the two air ducts (5, 6) form an exhaust air duct (7) and an external air duct (8), which can be closed or which can be opened partially or completely by means of a closure device (9) and, for fluidic connection, have a cross connection (22), to which the closure device (9) is assigned such that said closure device closes the cross sections of exhaust air duct (7) and external air duct (8) in a first position and thereby opens the cross connection (22) at least partially and opens the cross sections of exhaust air duct (7) and external air duct (8) complete or partially in at least a second position and thereby closes the cross connection (22) completely or partially, and comprising a second, middle device section (3), which has a heat recovery apparatus (10), a heat exchanger (11) and two air conveying devices (12, 13), which are assigned to the air ducts (5, 6) in the second device section (3), as well as comprising a third device section (4), which has an exhaust air duct (14) and a supply air duct (15) as air ducts (5, 6), to which a sound absorber (16) is assigned jointly.

2. The device concerning ventilation according to claim 1, **characterized in that** the closure device (9) has a ventilation flap (24), which is designed as a double flap (25) that has two flap blades (26, 27), wherein one flap blade (26, 27) cooperates with the first air duct (5) and the other flap blade (27, 26) cooperates with the second air duct (6).

3. The device concerning ventilation according to any one of the preceding claims, **characterized in that** the two flap blades (26, 27) cooperate with the cross connection (22).

4. The device concerning ventilation according to any one of the preceding claims, **characterized in that** the cross connection (22) has a connection cross section (55), which is composed of two partial cross sections (56, 57), wherein the one partial cross section (56, 57) cooperates with the one flap blade (26) and the other partial cross section (57, 56) cooperates with the other flap blade (27).

5. The device concerning ventilation according to any one of the preceding claims, **characterized in that** the cross connection (22) is designed as cross opening (23) or cross duct.

6. The device concerning ventilation according to any one of the preceding claims, **characterized in that** the air flap (24) has an axis of rotation (28), which is located between the two flap blades (26, 27) and in the cross opening (23) or the cross duct, in particular in the plane of the cross opening (23).

7. The device concerning ventilation according to any one of the preceding claims, **characterized in that** the two air ducts (5, 6) are separated from one another by means of a common partition wall (21).

8. The device concerning ventilation according to any one of the preceding claims, **characterized in that** the cross opening (23) is located in the partition wall (21).

9. The device concerning ventilation according to any one of the preceding claims, **characterized in** the design as decentralized device (1) concerning ventilation.

10. The device concerning ventilation according to any one of the preceding claims, **characterized in that** the one air duct (5) is an exhaust air duct (7) and the other air duct (6) is an external air duct (8).

11. The device concerning ventilation according to any one of the preceding claims, **characterized in that** the two air ducts (5, 6) have air openings that laterally adjoin one another, the one of which is an exhaust air opening (17) and the other one of which is an external air opening (19).

12. The device concerning ventilation according to any one of the preceding claims, **characterized in that** air control means (31) that avoid a short-circuit routing of air flow are assigned to the exhaust air opening (17) and/or to the external air opening (19).

13. A method for operating a device concerning ventilation according to one or any one of the preceding claims, comprising a first and a second air duct, wherein the two air ducts can be closed by means of a closure device or can be opened partially or completely, wherein the cross sections of both air ducts (5, 6) are closed in a first position of the closure device (9) and a cross connection (22) of the air ducts (5, 6) is thereby opened at least partially, and the cross sections of both air ducts (5, 6) are opened completely or partially in at least a second position of the closure device (9), and the cross connection (22) is thereby closed completely or partially.

14. The method according to claim 13, **characterized in that** a recirculating air operation takes place when the cross connection (22) is open.

15. The method according to any one of the preceding claims, **characterized in that** a heat recovery apparatus (10) of the device (1) concerning ventilation is operated by means of the recirculating air operation such that the possible freezing of said heat recovery apparatus is reduced or prevented.

## Revendications

1. Appareil de ventilation, comportant trois sections d'appareil (2, 3, 4) positionnées bout à bout ainsi que deux canaux d'air (5, 6), ces canaux d'air (5, 6) formant, dans une première section d'appareil (2), un canal d'air vicié (7) et un canal d'air extérieure (8), qui peuvent être fermés ou ouverts partiellement ou complètement au moyen d'un dispositif de fermeture (9) et qui comportent en termes de liaison aérodynamique une liaison de passage transversale (22), à laquelle le dispositif de fermeture (9) est associé, de telle sorte, que celui-ci ferme, dans une première position, les sections transversales du canal d'air vicié (7) et du canal d'air extérieure (8) en ouvrant au moins partiellement la liaison de passage transversale (22), et ouvre complètement ou partiellement dans au moins une deuxième position les sections transversales du canal d'air vicié (7) et du canal d'air extérieure (8) en fermant complètement ou partiellement la liaison de passage transversale (22), la deuxième section d'appareil (3) en position médiane étant équipée d'un dispositif de récupération de la chaleur (10), d'un échangeur thermique (11) et de deux dispositifs de transport d'air (12, 13) associés aux canaux d'air (5, 6) dans la deuxième section d'appareil (3), et dont la troisième section d'appareil (4) comporte en tant que canaux d'air (5, 6) un canal d'air vicié (14) et un canal d'air extérieure (15) auxquels est associé en commun un silencieux (16).

2. Appareil de ventilation selon la revendication 1, **caractérisé en ce que** le dispositif de fermeture (9) comporte un volet d'aération (24) qui, en possédant deux volets (26, 27), soit conçu en tant que double-clapet (25), un volet (26, 27) coopérant avec le premier canal d'air (5) et l'autre volet (27, 26) coopérant avec le deuxième canal d'air (6).

3. Appareil de ventilation selon l'une des revendications précédentes, **caractérisé en ce que** les deux volets (26, 27) coopèrent avec la liaison de passage transversale (22).

4. Appareil de ventilation selon l'une des revendications précédentes, **caractérisé en ce que** la liaison de passage transversale (22) comporte une section transversale de liaison (55) composée de deux sections partielles (56, 57), l'une section partielle (56, 57) coopérant avec le volet (26) et l'autre section partielle (57, 56) coopérant avec l'autre volet (27).

5. Appareil de ventilation selon l'une des revendications précédentes, **caractérisé en ce que** la liaison de passage transversale (22) soit conçue en tant qu'ouverture transversale (23) ou en tant que canal transversal.

6. Appareil de ventilation selon l'une des revendications précédentes, **caractérisé en ce que** le volet d'aération (24) comporte un axe de rotation (28), qui est situé entre les deux volets (26, 27) et dans l'ouverture transversale (23) ou dans le canal transversal, notamment dans le plan de l'ouverture transversale (23).

7. Appareil de ventilation selon l'une des revendications précédentes, **caractérisé en ce que** les deux canaux d'air (5, 6) soient séparés entre eux par une cloison de séparation (21) commune.

8. Appareil de ventilation selon l'une des revendications précédentes, **caractérisé en ce que** l'ouverture transversale (23) soit située dans la cloison de séparation (21).

9. Appareil de ventilation selon l'une des revendications précédentes, **caractérisé par** la conception en tant qu'appareil de ventilation décentralisé (1).

10. Appareil de ventilation selon l'une des revendications précédentes, **caractérisé en ce que** l'un des canaux d'air (5) soit un canal d'air vicié (7) et que l'autre canal d'air (6) soit un canal d'air extérieure (8).

11. Appareil de ventilation selon l'une des revendications précédentes, **caractérisé en ce que** les deux canaux d'air (5, 6) comportent latéralement des ouvertures d'air adjacentes, dont l'une est une ouverture pour l'air vicié (17) et l'autre, une ouverture pour l'air extérieure (19).

12. Appareil de ventilation selon l'une des revendications précédentes, **caractérisé en ce que** des moyens d'orientation de l'air (31) soient associés à l'ouverture d'air vicié (17) et/ou à l'ouverture d'air extérieure (19), pour éviter un court-circuit des flux d'air.

13. Procédé de fonctionnement d'un appareil de ventilation selon une ou plusieurs des revendication précédentes, avec un premier et un deuxième canal d'air, ces deux canaux d'air pouvant être fermés ou ouverts partiellement ou complètement à l'aide d'un dispositif de fermeture, dans lequel, dans une première position du dispositif de fermeture (9), les sections transversales des deux canaux d'air (5, 6) sont fermées en ouvrant au moins partiellement une liaison de passage transversale (22) des canaux d'air (5, 6), et que dans au moins une deuxième position du dispositif de fermeture (9) les sections transversales des deux canaux d'air (5, 6) sont ouverts complètement ou partiellement en fermant complètement ou partiellement la liaison de passage transversale (22).

14. Procédé selon la revendication 13, **caractérisé en ce qu'**un mode de service de recirculation d'air soit activé lorsque la liaison de passage transversale (22) est ouverte.

15. Procédé selon l'une des revendications précédentes, **caractérisé en ce qu'**un dispositif de récupération de chaleur (10) de l'appareil de ventilation (1) fonctionne par le mode de service de recirculation d'air de telle sorte qu'une possibilité de givrage soit réduite ou empêchée.
